(19)

Europäisches
Patentamt
European
Patent Office
Office européen
des brevets

(11)     **EP 1 370 989 B1**

(12)                  **EUROPEAN PATENT SPECIFICATION**

(45) Date of publication and mention
of the grant of the patent:
**09.09.2009  Bulletin 2009/37**

(51) Int Cl.:
***G06F 17/30*** (2006.01)

(21) Application number: **02718302.9**

(86) International application number:
**PCT/GB2002/001347**

(22) Date of filing: **20.03.2002**

(87) International publication number:
**WO 2002/075595 (26.09.2002 Gazette 2002/39)**

(54) **METHOD AND APPARATUS FOR IDENTIFYING ELECTRONIC FILES**

VERFAHREN UND SYSTEM ZUM IDENTIFIZIEREN VON ELEKTRONISCHEN DATEIEN

PROCEDE ET APPAREIL PERMETTANT D'IDENTIFIER DES FICHIERS ELECTRONIQUES

(84) Designated Contracting States:
**AT BE CH CY DE DK ES FI FR GB GR IE IT LI LU MC NL PT SE TR**

(30) Priority: **21.03.2001  GB 0107104**

(43) Date of publication of application:
**17.12.2003  Bulletin 2003/51**

(60) Divisional application:
**09006218.3 / 2 098 968**

(73) Proprietor: **MACROVISION CORPORATION**
**Santa Clara, CA 95050 (US)**

(72) Inventors:
• **MOORE, James Edward**
**Colchester,**
**Essex CO1 1SG (GB)**
• **WARD, Bruce**
**London SW1V 2ER (GB)**

(74) Representative: **Addison, Ann Bridget et al**
**Kilburn & Strode LLP**
**20 Red Lion Street**
**London WC1R 4PJ (GB)**

(56) References cited:
**WO-A-01/11496          US-A- 5 437 050**
**US-A- 5 918 223**

Printed by Jouve, 75001 PARIS (FR)

**Description**

This invention concerns a method and apparatus for identifying electronic files, particularly electronic files containing audio information. The invention has particular application in the identification of unknown audio files by matching such files with a master audio file.

It is envisaged that the invention will be employed for searching for particular audio files and audio tracks on the Internet and for checking whether the audio files or tracks which are located match a master audio track whose details are stored in a database.

It is already known to search for particular audio tracks on the Internet and to identify the tracks which are located by employing a person to play back the tracks which are located and to identify them by ear.

It is also known to store the title of a particular track in a database and to search the Internet for corresponding titles. Titles located in the search are compared with the title held in the database and, if there is a match, an assumption is made that the corresponding audio tracks also match. The drawback with this is that the actual audio tracks themselves are not compared and so the matching of tracks cannot be verified and the identification of untitled tracks is not possible. Consequently, the accuracy of such an arrangement leaves something to be desired.

Another known process takes the content of a particular audio track and subjects this in a computer or data processing apparatus to an algorithm which generates a code representing that track. This code is stored in a database of the computer. It is then possible to search the Internet for corresponding audio tracks by locating unknown tracks, subjecting them to the same algorithm to generate identification codes, and comparing such identification codes with the code in the database file to establish whether or not they match. However, such a process does not fully address a central problem of audio file matching, namely the fact that two files containing the same audio track need not contain precisely the same binary pattern. There may be differences caused, for example, by recordings originating from different sources, or starting at different points in time, or containing noise spikes or background noise. Given these differences, and depending on the precise coding algorithm employed, the code generation approach either generates spurious matches or fails to identify genuine matches. So the overall accuracy of the identification process is poor.

The present invention seeks to overcome the above problems and to provide a method and apparatus for reliably, accurately and rapidly identifying electronic files.

According to one aspect of the present invention, there is provided a method for identifying electronic files under test, the method comprising the steps of:

> reading a master file including a master signal sequence,
> dividing the master signal sequence into segments,
> generating a reference indicator representing each master signal segment, each said reference indicator comprising a simple value representing a distinguishing characteristic of the waveform in said master signal segment;
> storing the respective reference indicators as a master profile,
> reading a test file including a test signal sequence for comparison,
> dividing the test signal sequence into segments,
> generating respective test indicators for successive segments of the test signal sequence to form a test profile, each said test indicator comprising a simple value representing a distinguishing characteristic of the waveform in said test signal segment;
> comparing the reference and test indicators successively for respective corresponding segments of the master and the test signal sequences,
> determining whether the reference and the test indicators match, and
> generating a corresponding indication.

According to another aspect of the present invention, there is provided apparatus for identifying electronic files under test, the apparatus comprising:

> means for reading a master file including a master signal sequence,
> means for dividing the master signal sequence into segments,
> means for generating a reference indicator representing each master signal segment, each said reference indicator comprising a simple value representing a distinguishing characteristic of the waveform in said master signal segment;
> a store for storing the respective reference indicators as a master profile,
> means for reading a test file including a test signal sequence for comparison,
> means for dividing the test signal sequence into segments,
> means for generating respective test indicators for successive segments of the test signal sequence to form a test profile, each said test indicator comprising a simple value representing a distinguishing characteristic of the waveform in said test signal segment;

means for comparing the reference and test indicators successively for respective corresponding segments of the master and the test signal sequences,
means for determining whether the reference and the test indicators match, and
means for outputting a corresponding indication.

In a preferred form of the invention, the master signal and the test signal both comprise audio signals. For example, the master signal may represent a popular song or a track from a popular album, and the invention may be employed to check whether the test signal constitutes the same song or track.

Preferably, the master and the test signal sequences are taken from digitally encoded audio tracks.

Preferably, ach indicator is a simple value representing a distinguishing characteristic of the waveform, such as its dominant frequency in the respective segment. For example, the indicators may be generated by determining one of a zero crossing count or another dominant frequency value for the audio signal portion included in each segment.

Advantageously, the method or apparatus according to the invention is arranged to generate a plurality of profiles for a respective file by:

creating a first set of segments commencing from a first predetermined point of the signal sequence for generating a profile,
shifting the first predetermined point by a predetermined amount to a new predetermined point of the signal sequence, and
creating a new set of segments commencing from the new predetermined point to form another profile.

The invention is described further, by way of example, with reference to the accompanying drawings in which:

Figures 1 to 3 are flowcharts generally representing a process according to the present invention;
Figure 4 is a waveform diagram representing the digital encoding of an analogue waveform such as a master audio track;
Figure 5 is a waveform diagram showing the comparison of a master waveform with two test waveforms;
Figure 6 is a waveform diagram further illustrating the comparison of a test waveform with the master waveform;
Figure 7 is a waveform diagram showing a segment of the test waveform and showing how segment shifting is effected for comparison purposes;
Figure 8 is a flowchart representing the generation of a master file according to the present invention;
Figure 9 is a flowchart representing a sub routine in the generation of the master file according to Figure 8;
Figure 10 is a flowchart representing the comparison of a test file with the master file according to the present invention;
Figure 11 is a flowchart representing the step of forming a test profile according to the present invention;
Figure 12 is a flowchart representing a sub routine in the process of forming a test profile shown in Figure 11;
Figure 13 is a flowchart representing an optimised file matching process according to the present invention; and
Figures 14-16 are flowcharts representing sub routines of the optimised file matching process shown in Figure 13.

The invention as described herein is applied to the identification and matching of audio tracks. For example, such tracks may be popular songs, tracks from popular albums, or tracks from classical or other music recordings. They may also be tracks from voice recordings or other audio performances.

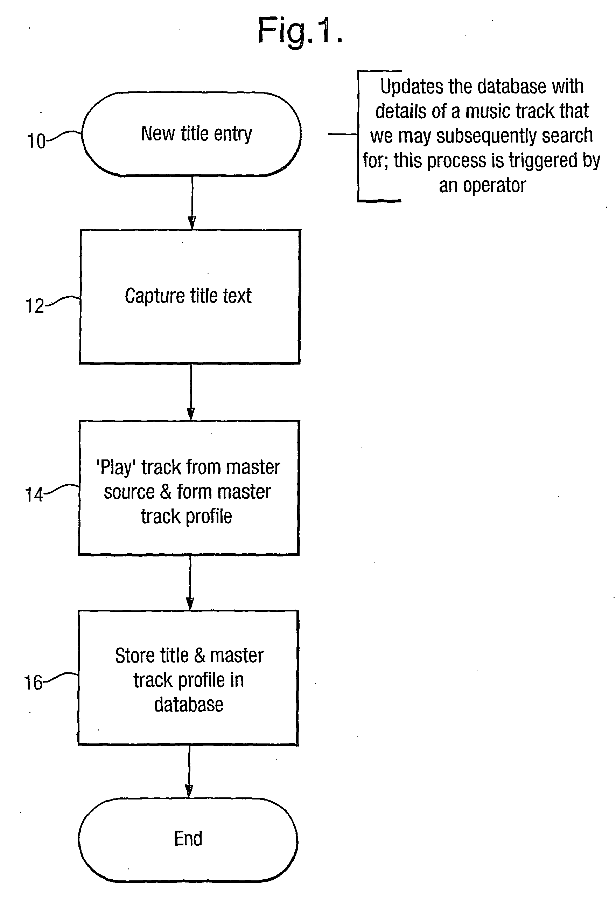

The invention will be described generally first with reference to Figures 1-3.

Figure 1 shows a flowchart representing the steps involved in generating a master or reference file in the database for implementing the present invention. Firstly, in step 10 a computer operator selects a new title and the corresponding audio track for entry into the computer database. The operator inputs the title text to the computer in step 12 and the computer captures this text as a name for a master file to be generated subsequently. In step 14, the computer receives the track corresponding to the title and generates a master file containing a track profile representing the track. The title and the master file are stored in a database of the computer in step 16 for subsequent processing.

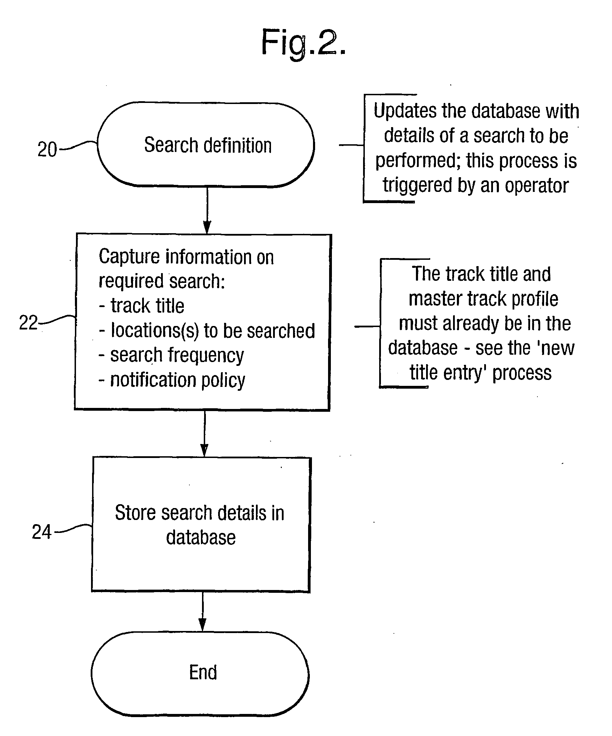

Turning now to Figure 2, when a search is requested for tracks matching the new master track entered into the computer in Figure 1, the computer operator formulates a search definition in step 20 identifying the title and the possible locations to be searched. In step 22, the operator enters search information into the computer including the title, the location or locations to be searched, and possibly the frequency at which searching is to be carried out. Such information is stored in the database in step 24 for subsequent use.

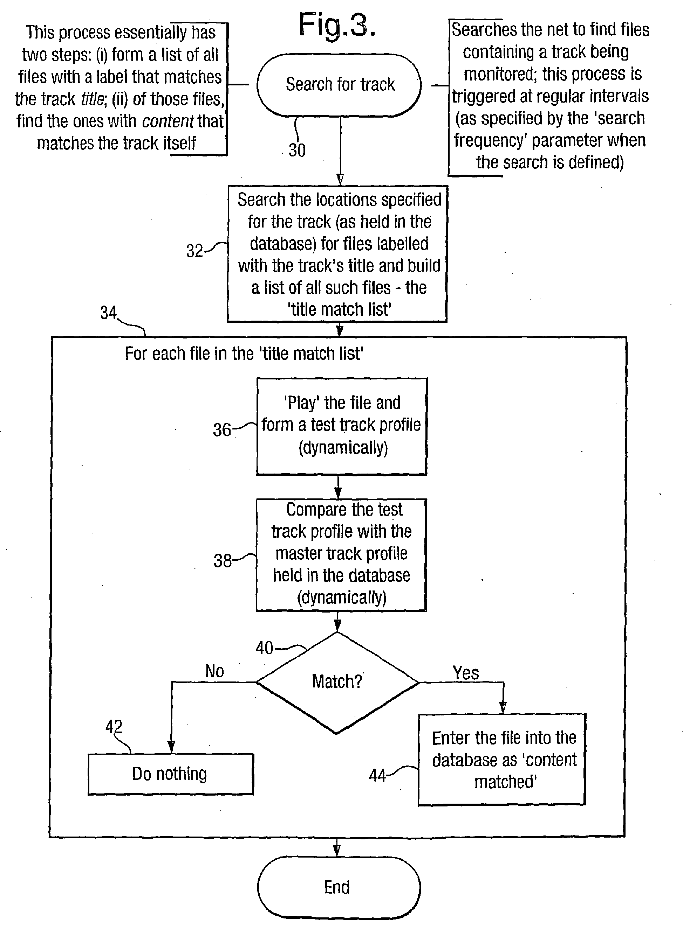

Figure 3 shows a flowchart representing an actual search, as follows. The search is initiated in step 30, and the computer accesses the database for the details stored in step 24 of Figure 2. In step 32, the computer performs a two-step operation, first searching the locations specified in step 24 for tracks having the specified title and secondly building up a list of test files containing tracks whose titles match. Next, in step 34, the computer checks each test file for the various tracks located. This involves dynamically forming a test track profile in step 36, followed in step 38 by dynamically comparing the test profile with the master profile already stored in the database in step 24. The outcome of the comparison is noted in step 40 and, if no match is found, the computer does nothing as shown in step 42. On the other hand, if a match is found, the computer proceeds to step 44 and enters into the database a flag or marker to indicate that a match has been found.

It will be appreciated that, although the steps described with reference to Figures 1-3 refer to a single master file and a single test file, in practice the database will store a number of master files and may be searching concurrently for matches for various different master files and may also be checking concurrently plural test files against each master file.

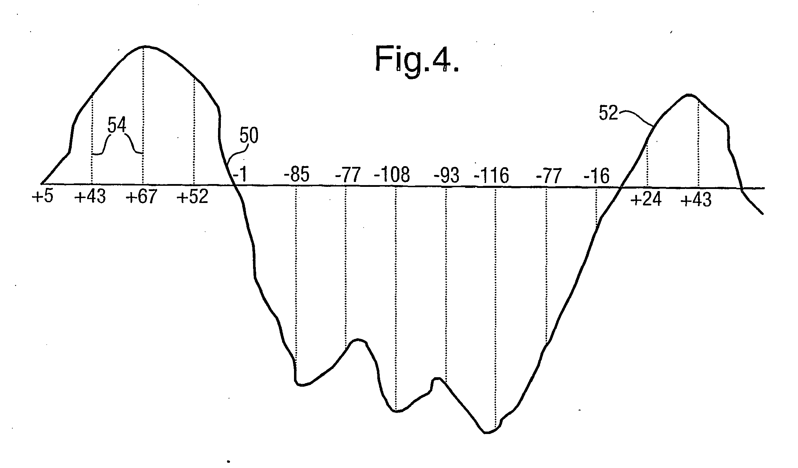

Turning to Figure 4, the process of forming a master profile and a test profile will be described in greater detail. Figure 4 represents an analogue waveform 50 corresponding with the audio sound recorded on a master track or an unknown test track as may be. In practice, the analogue audio signal will probably have been recorded in digitally encoded form by sampling the waveform many hundreds of times per second, sufficiently frequently to capture the highest frequency signal of interest in the waveform. At each sampling interval, the amplitude of the waveform is measured and encoded as a positive or negative number representing a single digital sample. This is indicated in Figure 4 by the stepped outline 52 to the waveform. By way of example, certain equally spaced sampling intervals 54 are shown in Figure 4 by dotted lines, and the corresponding numbers marked. The sequence of numbers from successive sampling intervals provides the digital encoding for the waveform.

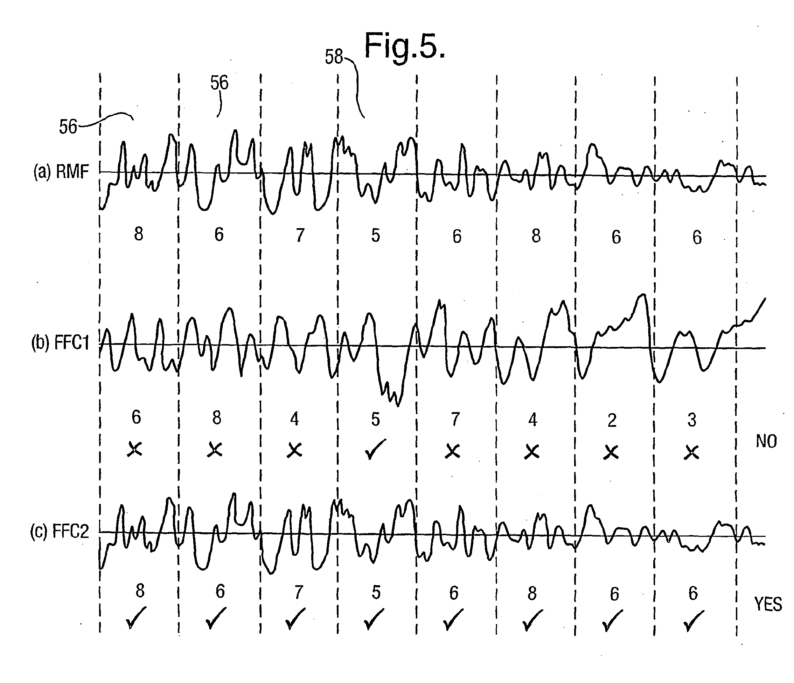

In order to generate a master profile for a master file or a test profile for a test file, the signal sequence is divided into fixed segments 56 of equal duration, typically 1/10 second, as shown in Figure 5. Referring to Figure 5, line (a) shows the analogue signal and corresponding profile for a master file and in lines (b) and (c) the analogue signals and corresponding profiles for two files to be tested. For each segment 56 of a particular track, the computer allocates a reference or test indicator representing the waveform in this segment 56. This indicator is a simple value representing a distinguishing characteristic of the waveform, such as its dominant frequency. In the present instance, the indicator is based on the zero crossing count for the waveform within that segment 56. More particularly, the computer detects the number of times that the waveform crosses the zero axis within the segment 56 and sets this number or zero crossing count as the indicator for the track for that segment 56. In practice, a zero crossing point can be detected whenever two successive digital samples have different signs, one positive and one negative, and the zero crossing count constitutes the number of times that such a point is detected during one segment 56. Figure 5 shows the successive zero crossing counts for each segment 56 for the master file as:

8, 6, 7, 5, 6, 8, 6, 6.

This series of numbers constitutes the master profile for the master file.

Likewise, Figure 5 shows a test profile for the first test file of:

6, 8, 4, 5, 7, 4, 2, 3.

The test profile for the second test file calculated in the same way is:

8, 6, 7, 5 , 6, 8, 6, 6.

In order to compare a test file with the master file, the computer begins forming the test profile segment by segment, i.e. it forms the test profile dynamically, and it then begins comparing the test profile with the master profile segment by segment, i.e. again dynamically.

As indicated in Figure 5, the test indicators for the first test file shown in line (b) match the reference indicators for the master file only in the fourth segment 58. In practice, the computer would have already discarded the first test file as a non-match on the basis of a comparison of the first few segments 56. Turning to the second test file represented in line (c), it will be seen that the test indicators match the reference indicators for every segment. In practice, the computer does not form profiles that represent the entire content of the master file and test audio files, but only profiles that represent "clips" from the start of these files of some 15 seconds duration. It will the conclude that there is a match if these two profiles correspond.

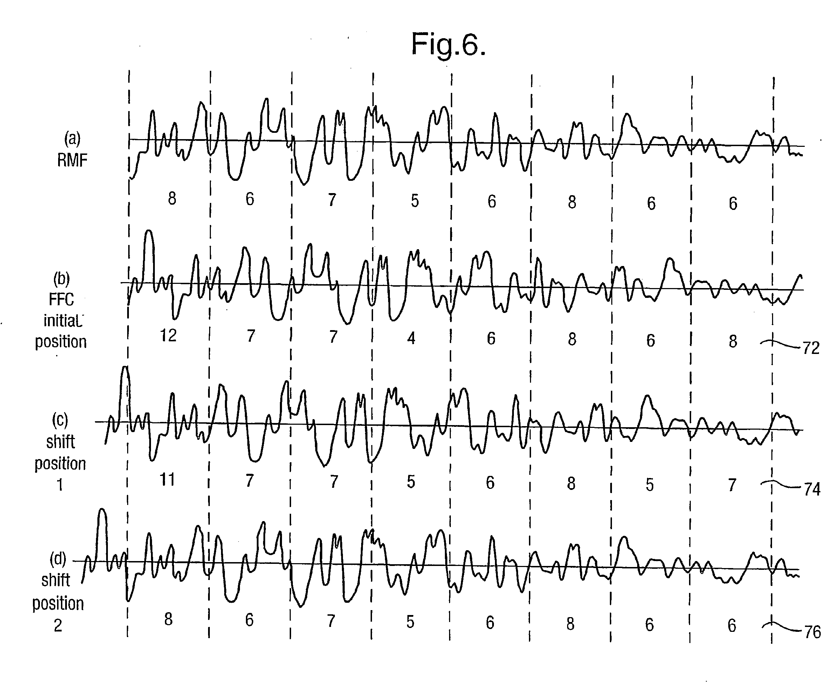

It will be appreciated that a particular test file might appear to be a non-match with the master file simply because the tracks on which the files are based are not synchronised in time so that the first segment 56 of the master file starts at a different point of the analogue waveform than the first segment 56 of the test file. In order to deal with this situation, the computer is arranged to generate a number of different test profiles for one test file by discarding initial portions of the test signal at the start of the test track, as shown in Figure 6.

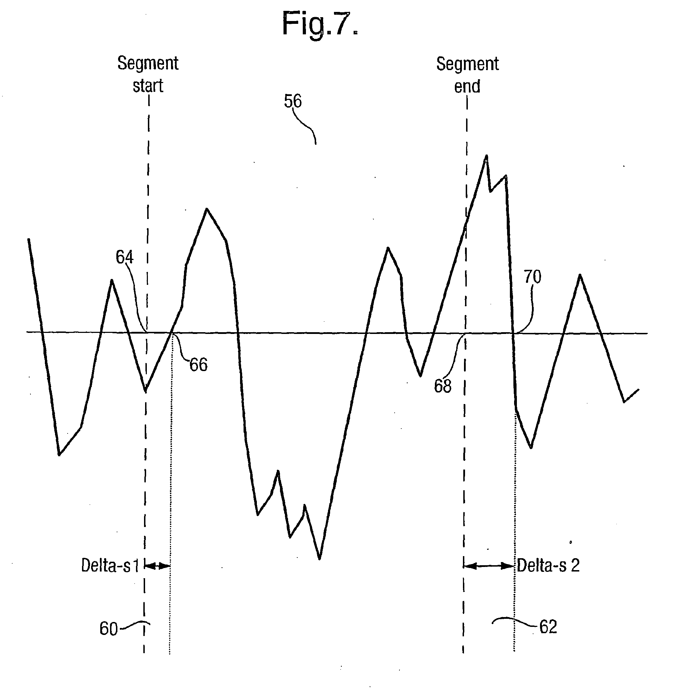

Figure 6 shows in line (a) the same master file as before, having the test code: 8, 6, 7, 5, 6, 8, 6, 6. Lines (b), (c) and (d) in Figure 6 represent a single test file from which first, second and third test profiles have been successively generated. The manner in which these subsequent test profiles are generated is illustrated in Figure 7.

Referring to Figure 7, a single segment 56 of the test file is shown enlarged, together with an incremental interval 60 designated delta-s1 immediately following the start of the segment and an incremental interval 62 designated delta-s2 immediately following the end of the segment. Delta-s1 represents the number of digital sampling intervals occurring between the starting point 64 of the segment 56 and the first zero crossing point 66 within the segment 56. Likewise, delta-s2 represents the number of digital sampling intervals between the ending point 68 of the segment 56 and the first zero crossing point 70 within the next segment. As will be appreciated, in order to change the zero crossing count for the particular segment illustrated, the starting point 64 of the segment must be shifted or delayed by an amount corresponding to delta-s1 or delta-s2, whichever is the smaller. In the example illustrated, delta-s1 is the smaller. Thus, the minimum shift needed to change the zero count of the segment 56 illustrated, and indeed of any one of the segments 56, is the smaller of delta-s1 and delta-s2 for that particular segment. If we call this value delta-seg, it follows that the minimum shift to generate a new test profile for the test file is a value which is the minimum delta-seg for all the segments, namely delta-min. Delta-min may in practice be a shift as small as 1/50000 second or less.

Returning now to Figure 6, the computer receiving the test signal shown in line (b) for checking, first forms a test profile 72 based on a segment starting point at the beginning of the test signal, which yields the test profile:

12, 7, 7, 4, 6, 8, 6, 8.

As is clear, this test profile does not correspond with the master profile for the master file. Consequently, the computer forms a second test profile 74 by establishing delta-s1 and delta-s2 for each segment and computing delta-seg from these two values. After scanning delta-seg for each of the segments and determining delta-min, the computer performs a shift on the test signal by an amount corresponding to delta-min and generates a new test profile 74 as shown in line (c ) of Figure 6. This new test profile 74 is:

11, 7, 7, 5, 6, 8, 5, 7.

Again, it is apparent that this second test profile does not match the master profile for the master file.

Consequently, the computer generates a further test profile 76 in the same manner by determining delta-min based on the test signal as shifted once more. This produces a third test profile 76, which is:

8, 6, 7, 5, 6, 8, 6, 6.

As can be seen, the third test profile 76 does match the master profile for the master file and hence the computer generates an output indicating that the test file corresponds to the master file and hence that the audio track from which the test file has been generated corresponds to the master track from which the master file has been generated.

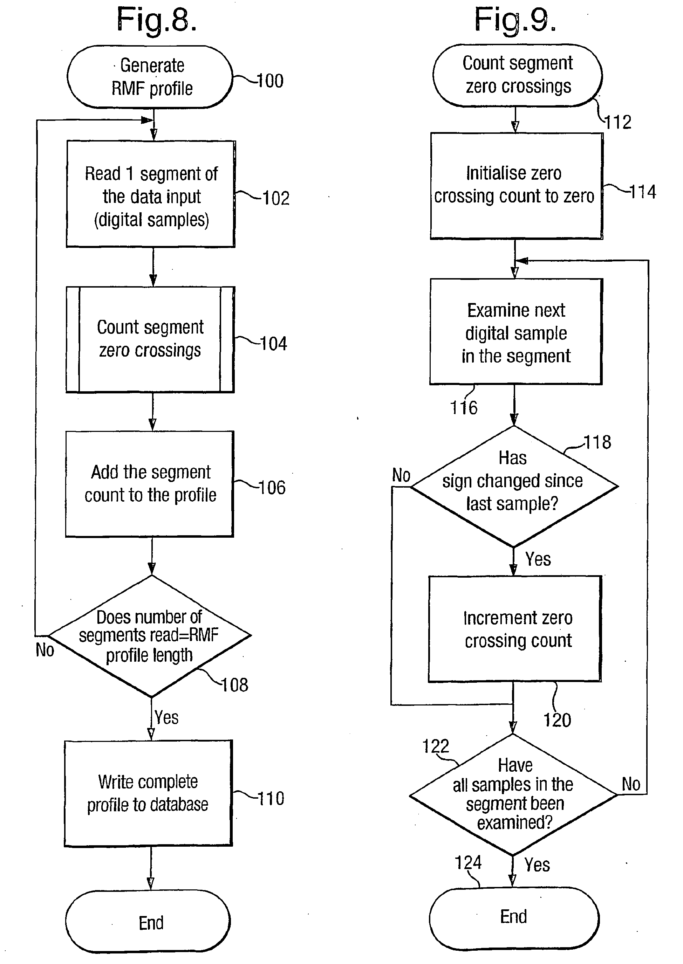

These steps are described more fully with reference to the flowcharts shown in Figure 8-12 below.

Referring to Figure 8, this shows a flowchart representing the generation of the master profile from the master file as indicated in step 14 shown in Figure 1. In step 100, the computer initiate this process. The computer reads the first segment of the master file in step 102 and determines the zero crossing count in step 104. In step 106, the computer adds the count established in step 104 to the profile formed so far. Next, the computer checks in step 108 whether the number of segments already read corresponds to the total number of segments required for the master profile. If the answer is no, the computer reverts to step 102 and reads the next segment. If the answer is yes, the computer proceeds to step 110 and stores the entire master profile in the database.

Figure 9 shows a flowchart representing the sub routine involved in step 104, as follows: The sub routine starts in step 112 and proceeds to step 114 where the computer initialises to zero a counter for detecting the zero crossing count. The computer then examines the digital number generated in the immediately following sampling interval in step 116, and in step 118 checks whether the sign has changed between positive and negative since the last sampling interval. If the answer is yes, the counter is incremented by 1 in step 120. On the other hand, if the answer is no, the computer proceeds to step 122 and checks whether the numbers from all the sampling intervals in the segment have yet been examined. If the outcome of step 122 is yes, the sub routine ends at step 124. On the other hand, if the outcome of step 122 is no, the computer returns to step 116 and examines the number from the next sampling interval.

The flowcharts illustrated in Figures 8 and 9 represent the production of the master profile as described above with reference to Figures 4 and 5.

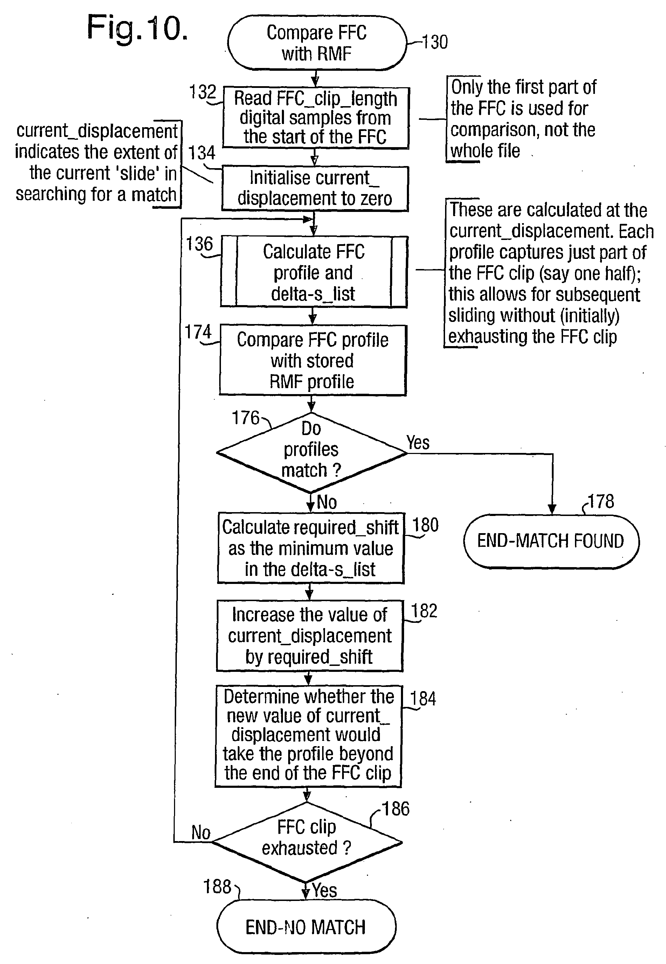

Turning now to Figure 10, the step of selecting a test file and generating a test profile for comparison with the master profile will now be described. The computer starts the procedure at step 130, and in step 132 reads an initial clip or signal sequence from the test file. In step 134, the computer initialises to zero a counter for detecting a current displacement for the starting point of the first segment. The computer then proceeds to calculate the test profile and the value delta-s for each segment in the clip, as shown in step 136.

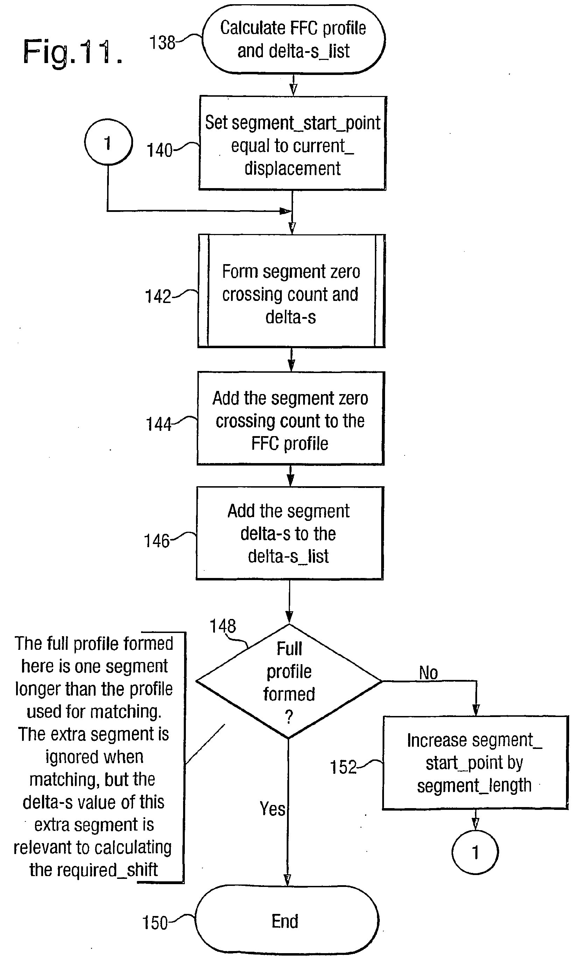

The sub routines included in step 136 are shown in Figure 11 and will now be described. The sub routine starts in step 138, and the computer proceeds in step 140 to set the start point for the segments to match the current displacement value, presently at zero. The computer continues to step 142 and determines the zero crossing count for the initial segment and delta-s for that segment. In step 144, the computer adds the zero crossing count determined in step 142 to a test profile store and in step 146 the computer adds delta-s calculated in step 142 to a store for all the values of delta-s. The computer proceeds to step 148 and checks whether the full test profile has yet been established. If the answer is yes, the computer proceeds to step 150 and the end of the sub routine. On the other hand, if the answer is no, the computer proceeds to step 152 and to the next segment by incrementing the current segment start point by an amount corresponding to the segment length. The computer then returns to step 142 to determine the zero crossing count and the delta-s for this new segment for storage in the test profile store and the delta-s store.

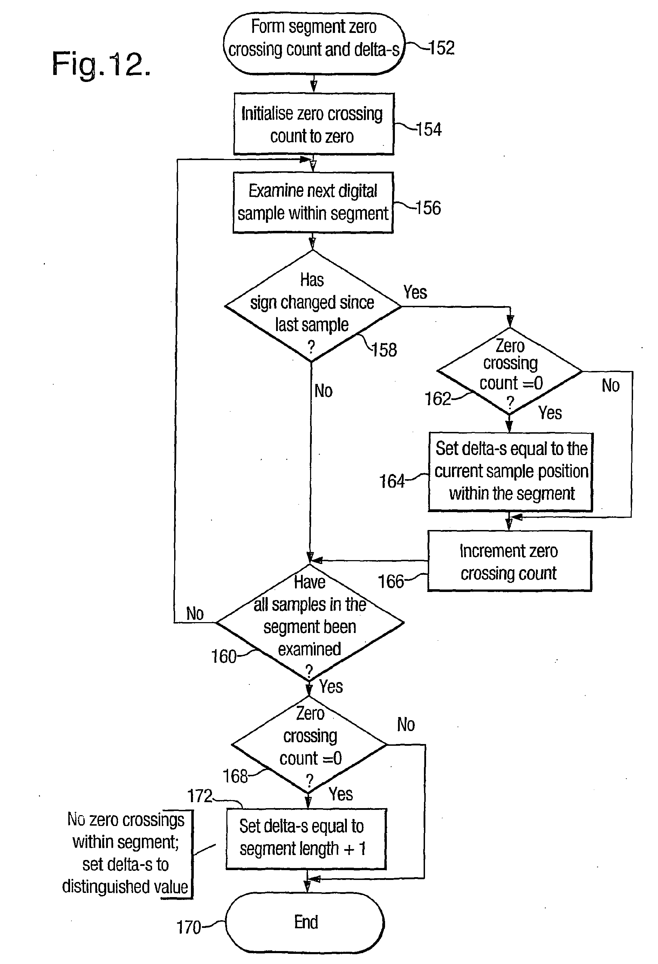

Turning to Figure 12, the sub routine involved in step 142 is illustrated and starts at step 154. In step 156, the computer initialises a counter for the zero crossing count to zero, and in step 156 the computer examines the number from the next sampling interval. In step 158, the computer establishes whether the sign has changed since the last sampling interval. If the answer is no, the computer proceeds to step 160 and checks whether all the sampling intervals in the segment have yet been examined. If the answer is yes, the computer proceeds to step 162 and enquires whether the zero crossing count is currently zero. If the outcome of step 162 is yes, the computer sets delta-s to be equal to the current sample position within the segment as shown in step 164. If the outcome of step 162 is no, the computer proceeds to step 166 and increments the counter for the zero crossing count by 1. The computer then proceeds to step 160 and checks whether all the sampling intervals in the segment have yet been examined. If the outcome of step 160 is no, the computer returns to step 156 and examines the number from the next sampling interval. On the other hand, if the outcome of step 160 is yes, the computer proceeds to step 168 and again checks whether the zero crossing count is currently at zero. If the outcome of step 168 is no, the computer proceeds to the end of the sub routine in step 170. On the other hand, if the outcome of step 168 is yes, the computer proceeds to step 172 and sets delta-s to be equal to the length of the segment plus 1. This would signify that there had been no zero crossings within the segment and so delta-s is set to a distinguished value. The computer then proceeds to step 170 and follows on to step 144 in the sub routine shown in Figure 11.

Returning now to Figure 10, having calculated the test profile and the full list of delta-s values for the clip taken from the test file, the computer proceeds to step 174 and compares the test profile established thus far with the master profile for the master file. This corresponds with the steps illustrated in Figures 5 and 6.

In step 176, the computer enquires whether the profiles match and if the answer is yes the computer indicates in step 178 that a match has been found. The computer then proceeds to step 44 as shown in Figure 3.

On the other hand, if the outcome of step 176 indicates that the test profile does not match the master profile, the computer proceeds to step 180 and calculates the shift required in the starting point for the segments in order to generate a new test profile for the clip. As described above, with reference to Figure 7, the amount of the shift corresponds to the minimum value for delta-s generated for all the segments tested. This value delta-min is selected and the current displacement for the starting point of the initial segment is incremented by such an amount in step 182. The computer proceeds to step 184 and determines whether such an increment would result in there being insufficient remaining of the clip read in step 132 for a complete test profile to be formed. In step 186, the computer enquires whether the clip is exhausted and if the answer is no, the computer reverts to step 136 and continues to calculate the test profile and delta-s list starting from a shifted location for the initial segment. On the other hand, if the outcome of step 186 is that the clip has been exhausted, the computer concludes in step 188 that there is no match between the clip and the master file and proceeds to step 42 in Figure 3.

For the sake of simplicity, the description thus far is based on a number of assumptions, one of which is that the zero crossing count of a segment in the test profile must be precisely the same as the zero crossing count of the corresponding segment in the master profile for the two segments to be regarded as matching. In practice, however, this requirement is too rigid. It does not cater for minor differences between the master and test files caused, for example, by the use of different audio encoding formats or by noise.

The required tolerance of such minor differences is achieved by relaxing the requirement for zero crossing counts to be identical. Instead, corresponding segments are regarded as matching if their zero crossing counts are very similar. Segment matching is then determined on the basis of the following equation:

$$[(ZX_{RMF}/\text{margin\_p}) - \text{margin\_b}] < ZX_{FFC} < [(ZX_{RMF} \times \text{margin\_p}) + \text{margin\_b}]$$

where:

   $ZX_{RMF}$ is the zero crossing count of the segment in the master file RMF

$ZX_{FFC}$ is the zero crossing count of the segment in the test file FFC
margin_p is a *relative* margin for error
margin_b is an *absolute* margin for error

In practice, values for margin_p and margin_b of 1.1 and 10, respectively, work well. This allows a margin of $\pm$ (10%+10).

Another assumption made thus far is that the test track from which the test profile is derived starts a little before the master track from which the master profile is derived. In practice this may not be the case. There may be several seconds difference between the start of the two tracks, in either direction. The test track may have spurious material at the beginning or, conversely, an initial fragment of the master track may be missing.

The situation where the test track includes spurious material at the start is already covered by the algorithm described above. The algorithm simply keeps shifting through the test file, discarding the spurious material, until the test and master files are synchronised.

However, the situation wherein an initial fragment of the master track is missing from the test track requires a minor extension to the algorithm. This entails extending the master profile generation process shown in Figure 8 to produce not just a single master profile for the given master file, but rather a set of such master profiles. Each such profile captures a 15 second clip from the master file. The first starts at the very beginning of the master file. The next begins 1.5 seconds into the master file. The next begins 3 seconds in, and so on, in 1.5 second increments, up to a maximum of 15 seconds. This gives a total of 11 master profiles for a single master file. All these 11 profiles can be formed by generating a single long profile capturing the first 30 seconds of the master file, as shown in Figure 8, and dynamically extracting the appropriate sub-sequences from that long profile as it is being formed.

The files comparison process then remains as shown in Figure 10, but with just one modification. Instead of comparing the test profile with just a single master profile, the comparison is made with all 11 profiles - the "base" profile and all the "late start" profiles.

This arrangement caters for missing fragments of any length up to 15 seconds. Any fine synchronisation necessitated by the missing fragment not being an exact multiple of 1.5 seconds is provided by the normal shifting mechanism. So with this extension, the algorithm is able to find a match when any 15 second sequence from the first 30 seconds of the test file matches any fifteen second sequence from the first 30 seconds of the master file.

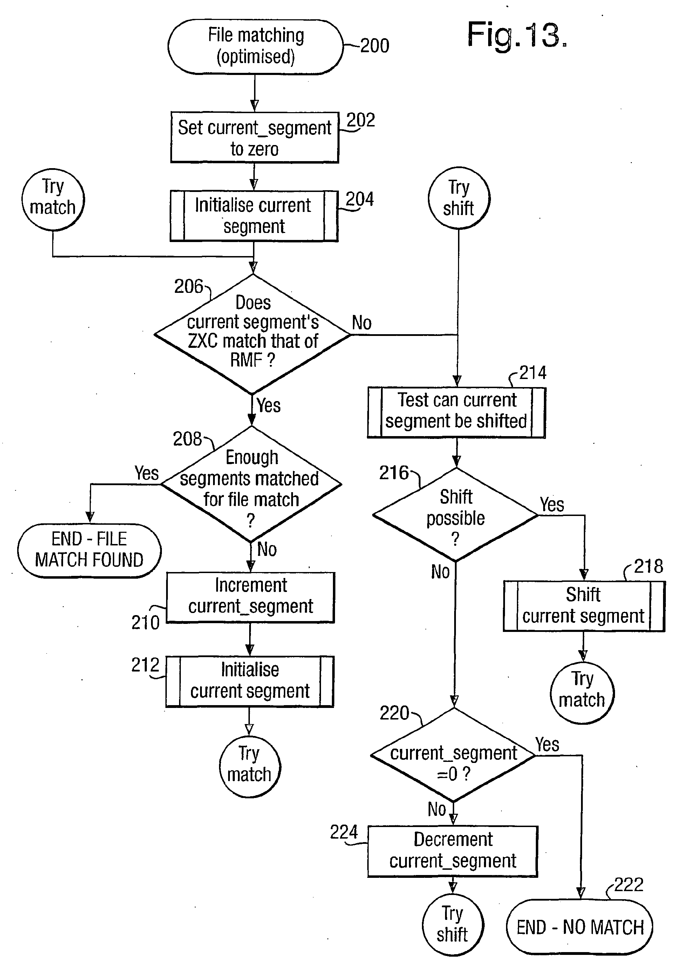

Turning now to Figures 13-16, a modification of the basic shifting segment algorithm will now be described. This modification is intended to optimise the performance of the present invention in two ways as follows:

(1) By calculating the zero crossing count for each respective segment of the test file successively and concurrently comparing that count with the corresponding count shown in the master profile.
(2) By avoiding recalculation of the zero crossing count for the previously considered segments wherever possible.

Thus, the process discontinues the computation of the test profile at a given shift position as soon as the first non-matching segment is found, but wherever possible re-uses previously computed values when forming the profile at the next shift position. Each test file is thereby dynamically compared with the master file.

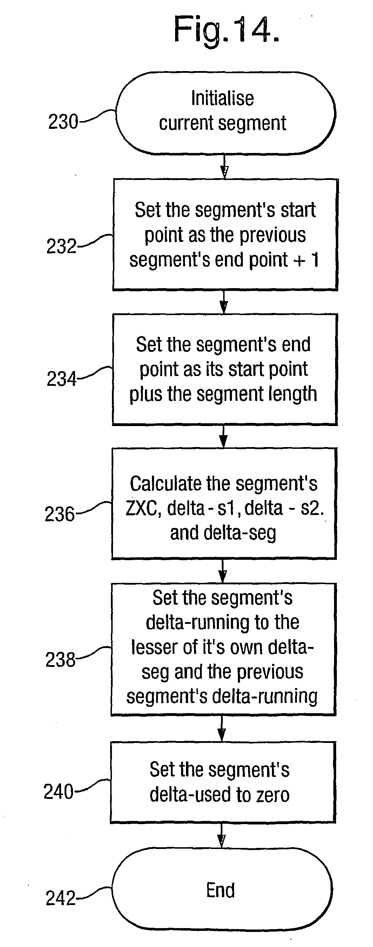

This process is represented in the flowchart of Figure 13 in which step 200 represents the selection of a particular test file containing a particular test track. In step 202, the computer sets a counter for counting the number of segments considered in the test track to zero, and in step 204 the computer initialises the first segment by setting the starting and ending points of the segment and by calculating the segments zero crossing count, together with delta-s 1, delta-s 2 and delta-seg. The computer proceeds to step 206 where it makes a comparison of the zero crossing count for the first segment of the test file and the zero crossing count for the first segment of the master file. If there is a match, the computer proceeds to step 208 and enquires whether enough segments match to indicate that the test file corresponds with the master file. Since this is the first segment, the answer will be no and so the computer proceeds to step 210 where it increments the segment counter by 1 and moves onto the next segment. In step 212, the computer initialises the next segment using the sub routine shown in Figure 14, and then it reverts to step 206 to check once more whether this a match between the next segment of the test file and the corresponding segment of the master file.

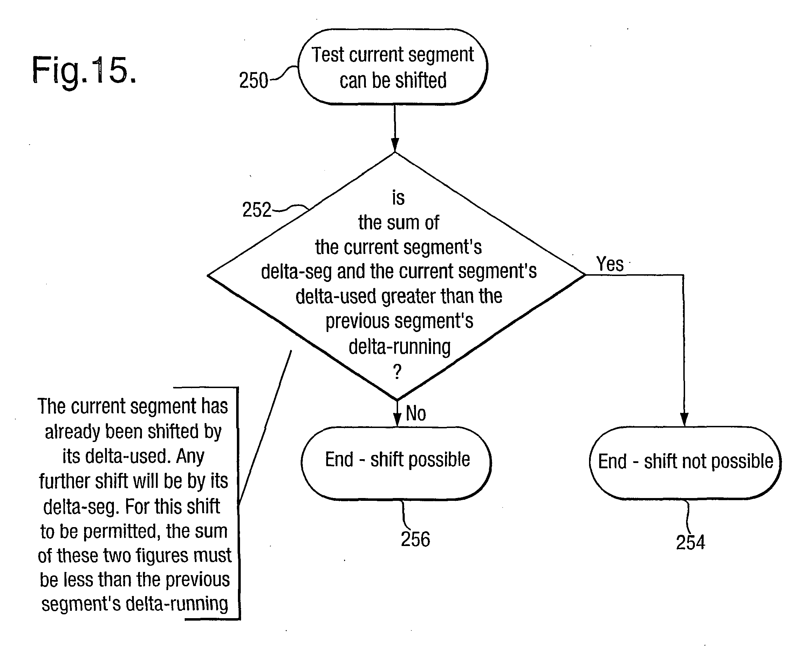

If no match is found at step 206, the computer proceeds to step 214 and checks whether the starting point of the current segment can be shifted without undoing matches already established for the preceding segments. This process is described below with reference to Figure 15. The outcome of such a check is established in step 216 and, if the shift is found to be possible, the computer proceeds to make such a shift in step 218 and then reverts to step 206 to check once again whether there is a match between the current segment of the test file and the corresponding segment of the master file. On the other hand, if the outcome of step 216 is an indication that a shift cannot be made without undoing matches established for the preceding segments, the computer proceeds to step 220. In step 220, the computer enquires whether the counter showing the number of the current segment is at zero. If the answer is yes, the computer assumes that no match is possible between the test file and the master file and proceeds to the end of the optimised procedure in step 222. However, if the counter is not at zero, the computer proceeds to step 224 and decrements the counter by 1 thereby reverting to the immediately preceding segment for reconsideration. At this point, the computer returns to step 214 and checks whether a shift of this preceding segment is possible without undoing matches already established for the segments prior to that.

Figure 14 is a flowchart showing the sub routine comprising step 204. This sub routine begins in step 230 with an instruction to initialise the segment currently being considered. In step 232, the computer sets the start point for the current segment to correspond with the end point of the previous segment plus one sampling interval. The computer proceeds to step 234 where it sets the end point for the current segment to correspond to the start point for the current segment plus the segment length. After this, in step 236, the computer calculates for the segment: the zero crossing count, the value delta-s 1 corresponding to the distance from the segment starting point to the first zero crossing point as shown in Figure 7, the value delta-s 2 corresponding to the distance from the segment end point to the first subsequent zero crossing as shown in Figure 7, and the value delta-seg which is the lesser of delta-s 1 and delta-s 2. The computer proceeds then to step 236 and sets a value for the segment known as delta-running. Delta-running corresponds to the maximum distance that a later segment can be shifted without altering the zero crossing count of the present or any earlier segments. Initially, this value is calculated to be the lesser of the values delta-seg for the present segment and delta-running for the previous segment. Finally, the computer proceeds to step 240 and sets a value known as delta-used for the present segment to zero. Delta-used represents the total amount by which a particular segment has already been shifted from its original starting point. This brings the computer to the end 242 for the sub routine for initialising a particular segment.

Figure 15 shows a flowchart for the sub routine involved in step 214 for testing whether the segment currently being considered can be shifted or not. This sub routine commences at steep 250, following which the computer proceeds to step 252. In step 252, the computer enquires whether the sum delta-seg plus delta-used for the current segment exceeds the value delta-running for the previous segment. If the answer is yes, the computer proceeds to step 254 and determines that a shift is not possible. If the answer is no, the computer proceeds to step 256 and determines that a shift is possible.

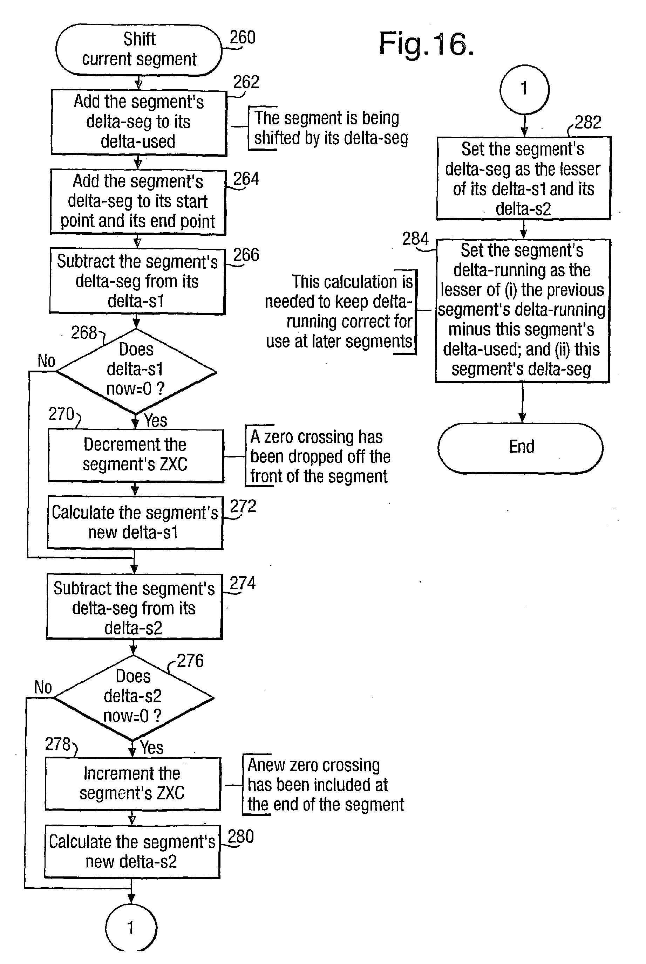

Turning finally to Figure 16, the sub routine involved in step 218 for shifting the current segment will now be described. This sub routine commences at step 260 as shown. The computer proceeds to step 262 and adds the value delta-seg to the value delta-used for the segment signifying that the segment is being shifted by delta-seg relative to whatever shifts have already occurred amounting to the value delta-used. This is implemented in step 264 where the value delta-seg is added to the start point and the end point for the segment. Next, in step 266, the computer subtracts the value delta-seg from the previous delta-s 1 for the segment. In step 268, the computer checks whether the new delta-s 1 is now equal to zero. If the answer is yes, this means that a zero crossing has been removed from the front of the segment by the shift, and the computer decrements the value in the counter for the zero crossing count by 1 in step 270. The computer then proceeds in step 272 to calculate a new delta-s 1 for the segment. Subsequently, either because the outcome of step 268 is an no or following the calculation of step 272, the computer proceeds to step 274 and subtracts from the value delta-s 2 for the segment the value delta-seg. In step 276, the computer then checks whether the value delta-s 2 is now zero or not. If the answer is yes, this indicates that a new zero crossing has been added at the end of the segment and the computer increments the counter for the zero crossing count for the segment by 1 in step 278. Subsequently, the computer calculates a new value delta-s 2 for the segment in step 280. After this, either because the outcome of step 276 is a no or having calculated a new delta-s 2 in step 280, the computer proceeds to step 282. In step 252, the computer sets a new value for delta-seg as the lesser of the present values for delta-s 1 and delta-s 2. Having made a shift, delta-running for the segment must also be recalculated and this is effected in step 284. In this step, the new delta-running is set to be the lesser of (i) the value delta-running for the previous segment minus the value delta-used for the current segment and (ii) the value delta-seg for the current segment. The sub routine for shifting the current segment is thus completed.

By means of the optimisation procedure described with reference to Figures 13-16, a very significant enhancement of the basic file matching algorithm is possible. Significantly, the speed of identification is greatly increased and therefore the number of unknown files which can be checked is also greatly increased.

The present invention has a number of significant benefits by comparison with known arrangements for comparing audio tracks or files.

Most significantly, it is unnecessary for two files being compared to be identical in their digital encodement for a match to be found. They can differ in various ways while still containing the "same" audio track. For example, the test track may have an initial fragment missing or it may contain additional material at the beginning. Equally, waveform variations caused by different digital coding formats, noise spikes or background noise, for example, can be accommodated.

These tolerances enable the invention to have a range of important applications, including the identification of illegal copies of a given audio track made available, for example, on the Internet. Copies that have been captured in a variety of different ways, for example through the use of different MP3 conversion programs, through bootleg recordings of live concerts, or through radio or television broadcasts, can be detected and matched, which would hitherto have been impossible.

Other benefits of the present invention include its speed, so that it is practical to compare a single unknown test file with many hundreds of master files stored in the database or to monitor an audio source such as a radio broadcast or webcast to identify any correspondences with the master files currently held in the database.

In addition, the invention is suited to standard industry hardware. Furthermore, there is no need to employ a watermark or in other ways to modify the original master track for correspondences to be found.

**Claims**

1. A method for identifying electronic files under test, the method comprising the steps of:

   reading a master file including a master signal sequence,
   dividing the master signal sequence into segments, **characterised by**
   generating a reference indicator representing each master signal segment, each said reference indicator comprising a simple value representing a distinguishing characteristic of the waveform in said master signal segment;
   storing the respective reference indicators as a master profile,
   reading a test file including a test signal sequence,
   dividing the test signal sequence into segments,
   generating respective test indicators for successive segments of the test signal sequence to form a test profile, each said test indicator comprising a simple value representing a distinguishing characteristic of the waveform in said test signal segment;
   comparing the reference indicators and the test indicators successively for respective corresponding segments of the master and the test signal sequences,
   determining whether the reference indicators and the test indicators match, and
   generating a corresponding indication.

2. A method according the claim 1 comprising generating a plurality of test profiles for a respective test file by:

   creating a first set of segments commencing from a first predetermined point of the test signal sequence for generating a first test profile,
   shifting the first predetermined point by a predetermined amount to a new predetermined point of the test signal sequence, and
   creating a new set of segments commencing from the new predetermined point to form another test profile.

3. A method according to claim 1 or 2 comprising effecting a dynamic comparison of the reference indicators and the test indicators by:

   performing the step of generating the respective test indicators and the step of comparing the reference and the test indicators for successive corresponding segments concurrently.

4. A method according to claim 2, or claim 3 when dependent from claim 2, comprising optimising the procedure for generating each new test profile by:

   computing a shift relative to the first predetermined point on an ongoing basis on each occasion that comparison of a respective reference indicator and a corresponding test indicator produces a non-match, and
   generating the respective new test profile.

5. A method according to claim 4 in which the computation comprises reusing previously generated test indicators forming an initial portion of a respective test profile in the event:

   a) that such test indicators match the corresponding reference indicators, and
   b) that a shift relative t o the associated predetermined point for subsequently generated test indicators will not undo the match.

6. A method according to any preceding claim comprising generating a plurality of master profiles for a respective master file by:

creating a first set of segments commencing from a first predetermined point of the master signal sequence for generating a first master profile,

shifting the first predetermined point by a predetermined amount to a new predetermined point of the master signal sequence, and

creating a new set of segments commencing from the new predetermined point to form another master profile.

7. A method according to any preceding claim comprising generating each reference indicator and/or each test indicator by:

detecting the number of occasions that the associated signal sequence traverses a predetermined base reference in the corresponding segment.

8. A method according to any preceding claim in which the step of determining whether the reference and the test indicators match comprises determining whether there is identity between the reference and the test indicators within predetermined tolerances.

9. Apparatus for identifying electronic files under test, the apparatus comprising:

means for reading a master file including a master signal sequence,

means for dividing the master signal sequence into segments, **characterised by**

means for generating a reference indicator representing each master signal segment, each said reference indicator comprising a simple value representing a distinguishing characteristic of the waveform in said master signal segment;

a store for storing the respective reference indicators as a master profile,

means for reading a test file including a test signal sequence,

means for dividing the test signal sequence into segments,

means for generating respective test indicators for successive segments of the test signal sequence to form a test profile, each said test indicator comprising a simple value representing a distinguishing characteristic of the waveform in said test signal segment;

means for comparing the reference and test indicators successively for respective corresponding segments of the master and the test signal sequences,

means for determining whether the reference and the test indicators match, and

means for outputting a corresponding indication.

10. Apparatus according to claim 9 comprising means for generating a plurality of test profiles relating to a respective test file including:

means for generating a set of segments commencing from a predetermined point of the test signal sequence for generating a respective test profile, and

means for shifting the predetermined point of the test signal sequence by a predetermined amount for generating another test profile.

11. Apparatus according to claim 9 or 10 comprising means for effecting a dynamic comparison of the reference indicators and the test indicators including:

control means arranged to operate the means for generating the respective test indicators and the comparing means concurrently.

12. Apparatus according to claim 10, or claim 11 when dependent from claim 10, comprising means for optimising the procedure for generating each test profile including:

means for computing a shift relative to a respective predetermined point in response to an indication from the outputting means that a respective reference indicator and a corresponding test indicator do not match.

13. Apparatus according to claim 12 in which the computation means comprises:

means for storing previously generated test indicators forming an initial portion of a respective test profile in the event that such test indicators match the corresponding reference indicators, and

means for checking whether a shift relative to the associated predetermined point for subsequently generated test indicators will undo the match.

14. Apparatus according to any of claims 9 to 13 comprising means for generating a plurality of master profiles relating to a respective master file including:

means for generating a set of segments commencing from a predetermined point of the master signal sequence for generating a respective master profile, and
means for shifting the predetermined point of the master signal sequence by a predetermined amount for generating another master profile.

15. Apparatus according to any of claims 9 to 14 in which the means for generating each reference indicator and/or each test indicator comprises:

means for detecting the number of occasions that the associated signal sequence traverses a predetermined base reference in the corresponding segment.

16. Apparatus according to any of claims 9 to 15 in which the means for determining whether the reference and the test indicators match are arranged to determine whether there is identity between the reference and the test indicators within predetermined tolerances.

**Patentansprüche**

1. Verfahren zum Identifizieren von zu testenden elektronischen Dateien, umfassend die Schritte:

Lesen einer Stammdatei, die eine Stamm-Signalsequenz enthält;
Teilen der Stamm-Signalsequenz in Segmente, **gekennzeichnet durch**
Generieren eines Referenzindikators, der jedes Stamm-Signalsegment repräsentiert, wobei jeder Referenzindikator einen einfachen Wert umfasst, der ein unterscheidendes Charakteristikum der Wellenform im Stamm-Signalsegment repräsentiert;
Speichern der jeweiligen Referenzindikatoren als Stammprofil,
Lesen einer Testdatei, die eine Test-Signalsequenz enthält,
Teilen der Test-Signalsequenz in Segmente,
Generieren jeweiliger Testindikatoren für aufeinanderfolgende Segmente der Test-Signalsequenz, um ein Testprofil zu erstellen, wobei jeder Testindikator einen einfachen Wert umfasst, der ein unterscheidendes Charakteristikum der Wellenform im Test-Signalsegment repräsentiert;
Vergleichen der Referenz- und Testindikatoren hintereinander für jeweilige entsprechende Segmente der Stamm- und Test-Signalsequenzen,
Bestimmen, ob die Referenz- und Testindikatoren übereinstimmen, und
Generieren einer entsprechenden Indikation.

2. Verfahren nach Anspruch 1, umfassend das Erstellen einer Mehrzahl von Testprofilen für eine jeweilige Testdatei durch:

Generieren eines ersten Satzes von Segmenten, der an einer ersten vordefinierten Stelle der Test-Signalsequenz beginnt, um ein erstes Testprofil zu erstellen,
Verschieben der ersten vordefinierten Stelle um eine vordefinierte Größe auf eine neue vordefinierte Stelle der Test-Signalsequenz, und
Generieren eines neuen Satzes von Segmenten, der an der neuen vordefinierten Stelle beginnt, um ein weiteres Testprofil zu erstellen.

3. Verfahren nach Anspruch 1 oder 2, umfassend das Ausführen eines dynamischen Vergleichs zwischen den Referenzindikatoren und den Testindikatoren durch:

gleichzeitiges Durchführen des Schritts des Generieren der jeweiligen Testindikatoren und des Schritts des Vergleichens der Referenz- und Testindikatoren für entsprechende aufeinanderfolgende Segmente.

**4.** Verfahren nach Anspruch 2 oder 3, wenn von Anspruch 2 abhängig, umfassend das Optimieren des Vorgangs zum Erstellen jedes neuen Testprofils durch:

permanentes Berechnen einer Verschiebung relativ zu einer ersten vordefinierten Stelle, wobei dies jedes Mal erfolgt, wenn der Vergleich eines jeweiligen Referenzindikators und eines entsprechenden Testindikators keine Übereinstimmung ergibt, und
Erstellen des jeweiligen neuen Testprofils.

**5.** Verfahren nach Anspruch 4, wobei das Berechnen das Wiederverwenden von zuvor generierten Testindikatoren, durch die ein erster Teil eines jeweiligen Testprofils gebildet wird, umfasst, wenn:

a) diese Testindikatoren mit den entsprechenden Referenzindikatoren übereinstimmen, und
b) eine Verschiebung relativ zur zugehörigen vordefinierten Stelle für danach generierte Testindikatoren die Übereinstimmung nicht aufhebt.

**6.** Verfahren nach einem vorhergehenden Anspruch, umfassend das Erstellen einer Mehrzahl von Stammprofilen für eine jeweilige Stammdatei durch:

Generieren eines ersten Satzes von Segmenten, der an einer ersten vordefinierten Stelle der Stamm-Signalsequenz beginnt, um ein erstes Stammprofil zu erstellen,
Verschieben der ersten vordefinierten Stelle um eine vordefinierte Größe auf eine neue vordefinierte Stelle der Stamm-Signalsequenz, und
Generieren eines neuen Satzes von Segmenten, der an der neuen vordefinierten Stelle beginnt, um ein weiteres Stammprofil zu erstellen.

**7.** Verfahren nach einem vorhergehenden Anspruch, umfassend das Generieren jedes Referenzindikators und/oder jedes Testindikators durch:

Detektieren der Anzahl von Vorfällen, bei denen die zugehörige Signalsequenz eine vordefinierte Basisreferenz im entsprechenden Segment kreuzt.

**8.** Verfahren nach einem vorhergehenden Anspruch, wobei der Schritt des Bestimmens, ob die Referenz- und Testindikatoren übereinstimmen, das Bestimmen umfasst, ob eine Gleichheit zwischen den Referenz- und Testindikatoren innerhalb vordefinierter Toleranzen besteht.

**9.** Vorrichtung zum Identifizieren von zu testenden elektronischen Dateien, mit:

Mitteln zum Lesen einer Stammdatei, die eine Stamm-Signalsequenz enthält,
Mitteln zum Teilen der Stamm-Signalsequenz in Segmente, **gekennzeichnet durch**
Mittel zum Generieren eines Referenzindikators, der jedes Stamm-Signalsegment repräsentiert, wobei jeder Referenzindikator einen einfachen Wert umfasst, der ein unterscheidendes Charakteristikum der Wellenform im Stamm-Signalsegment repräsentiert;
einem Speicher zum Speichern der jeweiligen Referenzindikatoren als Stammprofil,
Mitteln zum Lesen einer Testdatei, die eine Test-Signalsequenz enthält,
Mitteln zum Teilen der Test-Signalsequenz in Segmente,
Mitteln zum Generieren jeweiliger Testindikatoren für aufeinanderfolgende Segmente der Test-Signalsequenz, um ein Testprofil zu erstellen, wobei jeder Testindikator einen einfachen Wert umfasst, der ein unterscheidendes Charakteristikum der Wellenform im Test-Signalsegment repräsentiert;
Mitteln zum Vergleichen der Referenz- und Testindikatoren hintereinander für jeweilige entsprechende Segmente der Stamm-und Test-Signalsequenzen,
Mitteln zum Bestimmen, ob die Referenz- und Testindikatoren übereinstimmen, und
Mitteln zum Ausgeben einer entsprechenden Indikation.

**10.** Vorrichtung nach Anspruch 9, mit Mitteln zum Erstellen einer Mehrzahl von Testprofilen, die sich auf eine jeweilige Testdatei beziehen, mit:

Mitteln zum Generieren eines ersten Satzes von Segmenten, der an einer ersten vordefinierten Stelle der Test-Signalsequenz beginnt, um ein jeweiliges Testprofil zu erstellen,

Mitteln zum Verschieben der vordefinierten Stelle der Test-Signalsequenz um eine vordefinierte Größe zum Erstellen eines weiteren Testprofils.

11. Vorrichtung nach Anspruch 9 oder 10, mit Mitteln zum Ausführen eines dynamischen Vergleichs zwischen den Referenz-und Testindikatoren, mit:

Steuer- bzw. Regelmitteln, die eingerichtet sind, um die Mittel zum Generieren der jeweiligen Testindikatoren und die Vergleichsmittel gleichzeitig zu betreiben.

12. Vorrichtung nach Anspruch 10 oder 11, wenn von Anspruch 10 abhängig, mit Mitteln zum Optimieren des Vorgangs zum Erstellen jedes Testprofils, mit:

Mitteln zum Berechnen einer Verschiebung relativ zu einer jeweiligen vordefinierten Stelle in Antwort auf eine Indikation der Ausgabemittel, dass ein jeweiliger Referenzindikator und ein entsprechender Testindikator nicht übereinstimmen.

13. Vorrichtung nach Anspruch 12, wobei die Berechnungsmittel umfassen:

Mittel zum Speichern von zuvor generierten Testindikatoren, wobei ein erster Teil eines jeweiligen Testprofils gebildet wird, wenn diese Testindikatoren mit den entsprechenden Referenzindikatoren übereinstimmen, und Mittel zum Überprüfen, ob eine Verschiebung relativ zur zugehörigen vordefinierten Stelle.für danach generierte Testindikatoren die Übereinstimmung aufhebt.

14. Vorrichtung nach einem der Ansprüche 9 bis 13, mit Mitteln zum Erstellen einer Mehrzahl von Stammprofilen, die sich auf eine jeweilige Stammdatei beziehen, mit:

Mitteln zum Generieren eines Satzes von Segmenten, der an einer vordefinierten Stelle der Stamm-Signalsequenz beginnt, um ein jeweiliges Stammprofil zu erstellen, und
Mitteln zum Verschieben der vordefinierten Stelle der Stamm-Signalsequenz um eine vordefinierte Größe, um ein weiteres Stammprofil zu erstellen.

15. Vorrichtung nach einem der Ansprüche 9 bis 14, wobei die Mittel zum Generieren jedes Referenzindikators und/ oder jedes Testindikators enthalten:

Mittel zum Detektieren der Anzahl von Vorfällen, bei denen die zugehörige Signalsequenz eine vordefinierte Basisreferenz im entsprechenden Segment kreuzt.

16. Vorrichtung nach einem der Ansprüche 9 bis 15, wobei die Mittel zum Bestimmen, ob die Referenz- und Testindikatoren übereinstimmen, angeordnet sind, um zu bestimmen, ob eine Gleichheit zwischen den Referenz- und Testindikatoren innerhalb vordefinierter Toleranzen besteht.


**Revendications**

1. Procédé pour identifier des fichiers électroniques soumis à un test, le procédé comprenant les étapes de :

lecture d'un fichier principal comprenant une séquence de signal principal,
division de la séquence de signal principal en des segments, **caractérisé par**
la production d'un indicateur de référence représentant chaque segment de signal principal, chaque dit indicateur de référence comprenant une valeur simple représentant une caractéristique distinctive de la forme d'onde dans ledit segment de signal principal ;
le stockage des indicateurs de référence respectifs en tant que profil principal,
la lecture d'un fichier de test comprenant une séquence de signal de test,
la division de la séquence de signal de test en des segments,
la production d'indicateurs de test respectifs pour des segments successifs de la séquence de signal de test afin de former un profil de test, chaque dit indicateur de test comprenant une valeur simple représentant une caractéristique distinctive de la forme d'onde dans ledit segment de signal de test ;
la comparaison successive des indicateurs de référence et des indicateurs de test pour des segments respectifs correspondants des séquences de signal principal et de test,
la détermination de la concordance ou non des indicateurs de référence et des indicateurs de test, et
la production d'une indication correspondante.

**2.** Procédé selon la revendication 1, comprenant la production d'une pluralité de profils de test pour un fichier de test respectif par :

création d'un premier ensemble de segments commençant par un premier point prédéterminé de la séquence de signal de test pour produire un premier profil de test,
décalage du premier point prédéterminé d'une quantité prédéterminée vers un nouveau point prédéterminé de la séquence de signal de test, et
création d'un nouvel ensemble de segments commençant par le nouveau point prédéterminé pour former un autre profil de test.

**3.** Procédé selon la revendication 1 ou 2, comprenant l'exécution d'une comparaison dynamique des indicateurs de référence et des indicateurs de test par :

exécution simultanée de l'étape de production des indicateurs de test respectifs et de l'étape de comparaison des indicateurs de référence et de test pour des segments successifs correspondants.

**4.** Procédé selon la revendication 2 ou 3, lorsqu'elle dépend de la revendication 2, comprenant l'optimisation du processus de production de chaque nouveau profil de test par :

calcul d'un décalage par rapport au premier point prédéterminé de façon continue chaque fois que la comparaison d'un indicateur de référence respectif et d'un indicateur de test correspondant produit une non-concordance, et production du nouveau profil de test respectif.

**5.** Procédé selon la revendication 4, dans lequel le calcul comprend la réutilisation d'indicateurs de test produits précédemment formant une partie initiale d'un profil de test respectif dans le cas :

a) où ces indicateurs de test concordent avec les indicateurs de référence correspondants, et
b) où un décalage par rapport au point prédéterminé associé pour des indicateurs de test produits ultérieurement ne détruit pas la concordance.

**6.** Procédé selon l'une quelconque des revendications précédentes, comprenant la production d'une pluralité de profils principaux pour un fichier principal respectif par :

création d'un premier ensemble de segments commençant par un premier point prédéterminé de la séquence de signal principal pour produire un premier profil principal,
décalage du premier point prédéterminé d'une quantité prédéterminée vers un nouveau point prédéterminé de la séquence de signal principal, et
création d'un nouvel ensemble de segments commençant par le nouveau point prédéterminé pour former un autre profil principal.

**7.** Procédé selon l'une quelconque des revendications précédentes, comprenant la production de chaque indicateur de référence et/ou de chaque indicateur de test par :

détection du nombre de cas où la séquence de signal associée parcourt une référence de base prédéterminée dans le segment correspondant.

**8.** Procédé selon l'une quelconque des revendications précédentes, dans lequel l'étape de détermination de la concordance ou non des indicateurs de référence et de test comprend la détermination de l'existence ou non d'une identité entre les indicateurs de référence et de test en deçà de tolérances prédéterminées.

**9.** Appareil pour identifier des fichiers électroniques soumis à un test, l'appareil comprenant :

des moyens pour lire un fichier principal comprenant une séquence de signal principal,
des moyens pour diviser la séquence de signal principal en des segments, **caractérisé par**

des moyens pour produire un indicateur de référence représentant chaque segment de signal principal, chaque dit indicateur de référence comprenant une valeur simple représentant une caractéristique distinctive de la forme d'onde dans ledit segment de signal principal ;
une mémoire pour stocker les indicateurs de référence respectifs en tant que profil principal,
des moyens pour lire un fichier de test comprenant une séquence de signal de test,
des moyens pour diviser la séquence de signal de test en des segments,
des moyens pour produire des indicateurs de test respectifs pour des segments successifs de la séquence de signal de test afin de former un profil de test, chaque dit indicateur de test comprenant une valeur simple représentant une caractéristique distinctive de la forme d'onde dans ledit segment de signal de test ;
des moyens pour comparer successivement les indicateurs de référence et les indicateurs de test pour des segments respectifs correspondants des séquences de signal principal et de test,
des moyens pour déterminer si les indicateurs de référence et de test concordent, et
des moyens pour délivrer une indication correspondante.

**10.** Appareil selon la revendication 9, comprenant des moyens pour produire une pluralité de profils de test concernant un fichier de test respectif, comprenant :

des moyens pour produire un ensemble de segments commençant par un point prédéterminé de la séquence de signal de test afin de produire un profil de test respectif, et
des moyens pour décaler le point prédéterminé de la séquence de signal de test d'une quantité prédéterminée afin de produire un autre profil de test.

**11.** Appareil selon la revendication 9 ou 10, comprenant des moyens pour effectuer une comparaison dynamique des indicateurs de référence et des indicateurs de test, comprenant :

un moyen de commande conçu pour faire fonctionner simultanément les moyens de production des indicateurs de test respectifs et les moyens de comparaison.

**12.** Appareil selon la revendication 10 ou 11, lorsqu'elle dépend de la revendication 10, comprenant des moyens pour optimiser le processus de production de chaque profil de test, comprenant :

des moyens pour calculer un décalage par rapport à un point prédéterminé respectif en réponse à une indication fournie par les moyens de sortie selon laquelle un indicateur de référence respectif et un indicateur de test correspondant ne concordent pas.

**13.** Appareil selon la revendication 12, dans lequel les moyens de calcul comprennent :

des moyens pour stocker des indicateurs de test produits précédemment et formant une partie initiale d'un profil de test respectif dans le cas où ces indicateurs de test concordent avec les indicateurs de référence correspondants, et
des moyens pour vérifier si un décalage par rapport au point prédéterminé associé pour des indicateurs de test produits ultérieurement ne détruit pas la concordance.

**14.** Appareil selon l'une quelconque des revendications 9 à 13, comprenant des moyens pour produire une pluralité de profils principaux concernant un fichier principal respectif comprenant :

des moyens pour produire un ensemble de segments commençant par un point prédéterminé de la séquence de signal principal afin de produire un profil principal respectif, et
des moyens pour décaler le point prédéterminé de la séquence de signal principal d'une quantité prédéterminée pour produire un autre profil principal.

**15.** Appareil selon l'une quelconque des revendications 9 à 14, dans lequel les moyens de production de chaque indicateur de référence et/ou de chaque indicateur de test, comprennent :

des moyens pour détecter le nombre de cas où la séquence de signal associée parcourt une référence de base prédéterminée dans le segment correspondant.

**16.** Appareil selon l'une quelconque des revendications 9 à 15, dans lequel les moyens de détermination de la concordance ou non des indicateurs de référence et de test sont conçus pour déterminer s'il existe une identité entre les indicateurs de référence et de test en deçà de tolérances prédéterminées.

# Fig.1.

New title entry
10

Updates the database with
details of a music track that
we may subsequently search
for; this process is triggered by
an operator

Capture title text
12

'Play' track from master
source & form master
track profile
14

Store title & master
track profile in
database
16

End

# Fig.2.

Search definition — 20

Updates the database with details of a search to be performed; this process is triggered by an operator

Capture information on required search:
- track title
- locations(s) to be searched
- search frequency
- notification policy

22

The track title and master track profile must already be in the database - see the 'new title entry' process

Store search details in database — 24

End

# Fig.3.

This process essentially has two steps: (i) form a list of all files with a label that matches the track *title*; (ii) of those files, find the ones with *content* that matches the track itself

Searches the net to find files containing a track being monitored; this process is triggered at regular intervals (as specified by the 'search frequency' parameter when the search is defined)

Search for track

30

Search the locations specified for the track (as held in the database) for files labelled with the track's title and build a list of all such files - the 'title match list'

32

34

For each file in the 'title match list'

'Play' the file and form a test track profile (dynamically)

36

Compare the test track profile with the master track profile held in the database (dynamically)

38

40

Match?

No

Yes

42

Do nothing

Enter the file into the database as 'content matched'

44

End

Fig.4.

+5  +43  +67  +52  -1  -85  -77  -108  -93  -116  -77  -16  +24  +43

EP 1 370 989 B1

Fig.5.

EP 1 370 989 B1

Fig.6.

(a)
RMF

8    6    7    5    6    8    6    6

(b)
FFC
initial
position

12    7    7    4    6    8    6    8    ⁓72

(c)
shift
position
1

11    7    7    5    6    8    5    7    ⁓74

(d)
shift
position
2

8    6    7    5    6    8    6    6    ⁓76

EP 1 370 989 B1

# Fig.7.

Segment start

Segment end

56

64

66

68

70

Delta-s1

Delta-s 2

60

62

# Fig.8.

Generate
RMF profile — 100

↓

Read 1 segment of
the data input
(digital samples) — 102

↓

Count segment
zero crossings — 104

↓

Add the segment
count to the profile — 106

↓

Does number of
segments read=RMF
profile length — 108

No →

Yes ↓

Write complete
profile to database — 110

↓

End

# Fig.9.

Count segment
zero crossings

↓ — 112

Initialise zero
crossing count to zero — 114

↓

Examine next
digital sample
in the segment

116 ↓

Has
sign changed since
last sample? — 118

No →

Yes ↓

Increment zero
crossing count

120 ↓

Have
all samples in the
segment been
examined? — 122

No →

124 Yes ↓

End

# Fig.10.

```
      ┌─────────────────┐
      │   Compare FFC   │──130
      │    with RMF     │
      └─────────────────┘
```

132 — Read FFC_clip_length
digital samples from
the start of the FFC

Only the first part of
the FFC is used for
comparison, not the
whole file

current_displacement
indicates the extent of
the current 'slide' in
searching for a match

134 — Initialise current_
displacement to zero

136 — Calculate FFC
profile and
delta-s_list

These are calculated at the
current_displacement. Each
profile captures just part of
the FFC clip (say one half);
this allows for subsequent
sliding without (initially)
exhausting the FFC clip

174 — Compare FFC profile
with stored
RMF profile

176 — Do
profiles
match ?      Yes

No

Calculate required_shift   180
as the minimum value
in the delta-s_list

END-MATCH FOUND   178

Increase the value of   182
current_displacement
by required_shift

Determine whether the   184
new value of current_
displacement would
take the profile beyond
the end of the FFC clip

186

No    FFC clip
exhausted ?

188    Yes

END-NO MATCH

**Fig.11.** 138 — ( Calculate FFC profile and delta-s_list )

① 140 — | Set segment_start_point equal to current_ displacement |

142 — | Form segment zero crossing count and delta-s |

144 — | Add the segment zero crossing count to the FFC profile |

146 — | Add the segment delta-s to the delta-s_list |

The full profile formed here is one segment longer than the profile used for matching. The extra segment is ignored when matching, but the delta-s value of this extra segment is relevant to calculating the required_shift

148 — ◇ Full profile formed ?

No → 152 — | Increase segment_ start_point by segment_length | → ①

Yes ↓

150 — ( End )

**Fig.12.**

```
        ┌─────────────────────────┐
        │   Form segment zero     │
        │ crossing count and delta-s │──152
        └─────────────────────────┘
                    │
                    ▼
        ┌─────────────────────────┐
        │  Initialise zero crossing │──154
        │     count to zero        │
        └─────────────────────────┘
                    │
                    ▼
        ┌─────────────────────────┐
        │   Examine next digital   │──156
        │  sample within segment   │
        └─────────────────────────┘
                    │
                    ▼
              ╱──────────╲
             ╱    Has      ╲        Yes
            ╱ sign changed  ╲────────────────┐
            ╲  last sample  ╱                │
             ╲     ?       ╱                 ▼
              ╲──────────╱  158         ╱──────────╲
                  │                    ╱   Zero      ╲    No
                 No                   ╱  crossing     ╲───────┐
                  │                   ╲  count =0     ╱       │
                  │              162── ╲    ?        ╱        │
                  │                     ╲──────────╱          │
                  │                         │ Yes             │
                  │                         ▼                 │
                  │              ┌─────────────────────────┐  │
                  │              │  Set delta-s equal to the │  │
                  │         164──│ current sample position  │  │
                  │              │   within the segment     │  │
                  │              └─────────────────────────┘  │
                  │                         │                 │
                  │                         ▼                 │
                  │              ┌─────────────────────────┐  │
                  │              │   Increment zero        │◄─┘
                  │         166──│   crossing count        │
                  │              └─────────────────────────┘
                  ▼                         │
              ╱──────────╲◄─────────────────┘
    No       ╱   Have      ╲
  ┌─────────╱ all samples in the ╲
  │         ╲  segment been    ╱
  │    160── ╲   examined     ╱
  │           ╲     ?        ╱
  │            ╲──────────╱
  │                │ Yes
  │                ▼
  │          ╱──────────╲
  │         ╱   Zero      ╲      No
  │        ╱  crossing     ╲──────────┐
  │        ╲  count =0     ╱          │
  │   168── ╲    ?        ╱           │
  │          ╲──────────╱            │
  │   172        │ Yes               │
  │    │         ▼                   │
┌──────────┐ ┌─────────────────────┐ │
│No zero   │ │ Set delta-s equal to │ │
│crossings │ │ segment length + 1   │ │
│within    │ └─────────────────────┘ │
│segment;  │          │              │
│set delta-s│         ▼              │
│to        │   ┌───────────┐◄────────┘
│distinguished│ │    End    │
│value     │   └───────────┘
└──────────┘      │
              170──
```

**Fig.13.**

```
        ┌─────────────────────┐
        │   File matching     │─── 200
        │    (optimised)      │
        └─────────────────────┘
                  │
                  ▼
        ┌─────────────────────┐
        │ Set current_segment │── 202
        │      to zero        │
        └─────────────────────┘
                  │
                  ▼
        ┌─────────────────────┐
   Try  │  Initialise current │── 204
  match │      segment        │
        └─────────────────────┘
```

206 — Does current segment's ZXC match that of RMF ? — No

Yes

208 — Enough segments matched for file match ? — Yes → END - FILE MATCH FOUND

No

Increment current_segment — 210

212 — Initialise current segment

Try match

Try shift

Test can current segment be shifted — 214

216 — Shift possible ? — Yes → Shift current segment — 218 → Try match

No

220 — current_segment =0 ? — Yes → END - NO MATCH — 222

No

224 — Decrement current_segment → Try shift

# Fig.14.

230 — ( Initialise
current segment )

232 — Set the segment's start
point as the previous
segment's end point + 1

234 — Set the segment's end
point as its start point
plus the segment length

236 — Calculate the segment's
ZXC, delta - s1, delta - s2.
and delta-seg

238 — Set the segment's
delta-running to the
lesser of it's own delta-
seg and the previous
segment's delta-running

240 — Set the segment's
delta-used to zero

242 — ( End )

## Fig.15.

EP 1 370 989 B1

250 — Test current segment can be shifted

252 — is the sum of the current segment's delta-seg and the current segment's delta-used greater than the previous segment's delta-running ?

Yes

No

The current segment has already been shifted by its delta-used. Any further shift will be by its delta-seg. For this shift to be permitted, the sum of these two figures must be less than the previous segment's delta-running

End - shift possible

256

End - shift not possible

254

# Fig.16.

**Shift current segment** — 260

**Add the segment's delta-seg to its delta-used** — 262
> The segment is being shifted by its delta-seg

**Add the segment's delta-seg to its start point and its end point** — 264

**Subtract the segment's delta-seg from its delta-s1** — 266

268 — **Does delta-s1 now=0 ?**
- No →
- Yes ↓

270 — **Decrement the segment's ZXC**
> A zero crossing has been dropped off the front of the segment

272 — **Calculate the segment's new delta-s1**

274 — **Subtract the segment's delta-seg from its delta-s2**

276 — **Does delta-s2 now=0 ?**
- No →
- Yes ↓

278 — **Increment the segment's ZXC**
> A new zero crossing has been included at the end of the segment

280 — **Calculate the segment's new delta-s2**

→ (1)

(1) ↓

282 — **Set the segment's delta-seg as the lesser of its delta-s1 and its delta-s2**

284 — **Set the segment's delta-running as the lesser of (i) the previous segment's delta-running minus this segment's delta-used; and (ii) this segment's delta-seg**
> This calculation is needed to keep delta-running correct for use at later segments

**End**